# EUROPEAN PATENT APPLICATION

(11) **EP 2 009 297 A1**
(43) Date of publication of application: **31.12.2008**
(21) Application number: 07111060.5
(22) Date of filing: 26.06.2007
(51) Int. Cl.: F16B 31/02

(54) **A device for indicating the tension in a fastening member, such as a screw or the like**

(71) Applicant: Rockwool International A/S, 2640 Hedehusene (DK)
(72) Inventor: Bjerngaard, Nikolaj, 2100 Copenhagen (DK); Jakobsen, Nikolaj Eusebius, 2500 Valby (DK)
(74) Representative: HOEIBERG A/S

(57) **Abstract**

The invention concerns a device for indicating the tension in a fastening member, such as a screw (3) or the like, said device comprising a spring member (1) having a first sheet portion (11) with a fastening member receiving aperture (15), a second sheet portion (12), and a joining bending portion (13) connecting said first and second sheet portions, so that the first and second portions are biased towards each other by the head of the fastening member in response to the tightening of said fastening member, wherein said device is provided with first tension indicator means (14) indicating the tension in the elongated fastener at least until the tension exceeds a first predetermined tension value. Moreover, there may be provided irreversible second tension indicator means (22) for indicating if the tension in the elongated fastener during the mounting process has been exposed to a tension exceeded a second predetermined tension value, where said second tension is higher than said first tension value.

## Description

In the present application all references to patents and patent applications are incorporated by reference.

The present invention relates to a device for indicating the tension in a fastening member, such as a screw or the like, said device comprising a spring member having a first sheet portion with a fastening member receiving aperture; a second sheet portion, and a joining bending portion connecting said first and second sheet portions, so that the first and second portions are biased towards each other by the head of the fastening member in response to the tightening of said fastening member. The invention also relates to a mounting system with one or more of such devices.

From US 4,572,717 is known a tension indicating device which has an indicating arm and reference means carried by a stamped generally frustoconical spring washer. The arm and the reference means mechanically engage each other and the arm is designed to be visually discernable from a distance in response to the tension of a screw as the frustoconical spring washer is flattened due to tightening of the screw whereby the arm is loosened from its engagement with the reference means.

From US 4,988,246 is known an apparatus for indicating incomplete and complete fastening of a screw. The apparatus includes a washer and a ring of a generally flat synthetic resin sheet. The washer includes a pair of washer portions of a generally flat, round shape and a joint portion interconnecting the washer portions to face them in opposite directions to enable the washer portions to receive a shank of a screw in the openings thereof. The lengthwise section of the joint portion forms generally a U shape. The ring is made of a generally round, deformable material and is inserted between the pair of washer portions thus facing each other. The deformable material is expanded radially outward, when compressed by the washer portions receiving the shank of the screw when fastened. Upon the compressive force reaching a predetermined value, the ring will be broken due to the pair of washer portions overlaying one another.

The known tension indicating devices are able to indicate if a screw is incompletely fastened as a first part is mounted onto a second part. Furthermore there is known that for some purposes, the two parts must be mounted to one another with a predetermined tension in the screw. For this purpose, torque indication tools are provided to ensure that the screw is not mounted with excessive tension, so that damage of the parts may be prevented.

However, by the invention it is realised that these torque limiting mounting tools are insufficient to achieve a satisfactory predetermined tension in the screw. Hence, it is an object of the invention to provide a tension indicating device which is capable of indicating the level of tension that the screw has been loaded with during mounting.

The object is achieved by a tension indicating device of the initially mentioned kind, wherein said device is provided with first tension indicator means indicating the tension in the elongated fastener by indicating the relative displacement between the first and second sheet portions at least until the tension exceeds a first predetermined tension value.

Preferably, the device is also provided with irreversible second tension indicator means for indicating if the tension in the elongated fastener during the mounting process has been exposed to a tension exceeded a second predetermined tension value, where said second tension is higher than said first tension value.

Whereas torque limiting tools are only suitable for mounting screws or bolts with a predetermined tension in metal parts, the invention provides a tension indicating device which is suitable for mounting elements, such as building cover panels, onto a concrete wall or the like, where the receiving inner part, such as a concrete or brick wall, is likely to be damaged if the screw is tightened too much, i.e. provided with too much tension. This may cause the brittle concrete or brick wall to be deteriorated in the hole which is produced by a self-tapping screw. According to the invention, the tension indicating device will leave a permanent visible indication about the tension in the screw, and it can therefore be visibly seen, if the particular screw cannot be expected to contribute sufficiently to the retention of the first part onto the second part.

In particular, the invention is advantageous in relation to an insulating wall system for a building structure of the kind disclosed in PCT/EP2007/002791 (not yet published) where the wall system comprises an inner wall having an exterior surface with insulation material attached to said exterior surface of said inner wall by elongated fastening members, such as screws, extending through at least one insulation mounting profile and the insulation material so that the insulation material is fixed to the first wall, wherein elongated fastening members are mounted substantially perpendicular to the exterior surface of the inner wall and wherein the elongated fastening members are mounted prestressed with a predetermined amount of tension so that frictional forces between the insulation member and the inner wall and the one or more outer wall members, respectively, are provided. Hereby, frictional forces between the insulation member and the first wall and the second wall, respectively, are provided that are sufficient to transfer the weight of the second wall to the first wall exclusively by establishing a friction force between the insulation and the second wall and between the insulation and the first wall. When the prestressed mounting of the fastening screws is important in order to establish frictional forces between the insulation and the inner wall and the insulation and the mounting profiles, any loss of mounting force in any of the screws may have an adverse effect on the frictional mounting of the insulation, and may even be critical if the sufficient frictional forces are not produced due to bad mounting of one or more of the screws. By the invention, there is provided a tension indicating washer device which can visibly indicate the tension in a screw, and in particular if a screw has been excessively tension loaded during the mounting. This will enable an inspection to reveal any poorly mounted screws in the mounting of an insulation carrying sub-structure for a building façade, so that any such poorly mounted screws may be replaced.

In the preferred embodiment, the first and second tension indicator means indicate an angular displacement of the first portion relative to the second portion of the spring member. As the amount of biasing force implied on the spring member caused the spring member to elastically bend, the first and second portions are angularly displaced and bent towards each other as the spring member is substantially U-shaped. Hereby, the displacement of the first portion relative to the second portion is indicative of the tension in the screw.

In a preferred embodiment, the first portion is provided with an indicator at its distal end opposite the bending portion cooperating with the first and second tension indicator means respectively for indicating the displacement between the first and second portions of the spring members. This indicator may be a tap at the distal end and the first tension indicator means may further include at least one alignment element adjacent the indicator on the first portion. When the indicator tap is aligned with the at least one alignment element, the correct tension in the screw is obtained. As the second indicator means preferably include a tear-off element, preferably mounted between two alignment elements of the first tension indicator means, this tear-off element is provided such that if the displacement of the indicator tap, i.e. the displacement of the first sheet portion, is pressed beyond the alignment of the alignment elements of the first indicator means, the tear-off element of the second indicator means is broken away from the alignment element. The absence of this tear-off element will indicate an over-tightened screw which at least at some stage during its mounting had been provided with too much tension and thereby having subjected the anchoring structure in the inner wall (the substructure) to a potential damage.

In a preferred embodiment, the second portion is provided with an aperture, such as a hole or a cut-away, adjacent the fastening member receiving aperture of said first portion.

In the preferred embodiment, the first and second tension indicator means are provided on an indicator support member in which the spring member is accommodated. The support member is preferably made in a plastic material whereas the spring member is made in a steel material or similar metal material providing good elastic deformation properties and with a superior stiffness of the indicator tap relative to the material and the design of the tear-off element on the support member. The support member being in a plastic material is advantageous since the support member thereby is thermally insulating the spring member. Thus, the support member is preventing a thermal bridge between the profiles on the outside of the insulation and the inner wall.

Preferably, the second portion of the spring member is provided with one or more attachment means cooperating with retention means provided on the support member, said attachment means preferably including a set of retention hook-like members of said support member engaging cooperating retention apertures in the second sheet portion of the spring member. Hereby, it is ensured that the spring member is accommodated in the support member in a predetermined position, whereby the displacement indications of the first and second indicator means are ensured to be correctly indicative of the tension in the fastening member.

Preferably, said first and second indication means are provided opposite to said bending portion relative to the fastening member receiving aperture. Hereby, a good spring effect involving sufficient relative displacement between the first and second portions of the leaf-spring-like spring member is achieved in order to provide an accurate tension indication of the screw.

In order to achieve an accurate predetermined position of the spring member in the support member, the support member is provided with a fastener support cylindrical portion at least having a first protrusion for accommodating the aperture of the second portion of the spring member. Moreover, said first protrusion is provided with retention elements for retaining said spring member in a predetermined position in the support member and relative to the first and second indicator means on said support member. Furthermore, the support member is preferably provided with a second protrusion projecting in the opposite direction relative to the first protrusion, wherein said second protrusion is provided with an external diameter adapted for being accommodated in the mounting holes in the base profile.

In a second aspect of the invention, there is provided a mounting system comprising an elongated mounting profile comprising a base portion and two side flanges projecting out of the plane of the base portion defining the internal width of said base portion, and said base portion being provided with mounting holes for receiving a fastening screw; a device for indicating the tension in a fastening member, such as a screw or the like, said device comprising a spring member having a first sheet portion with a fastening member receiving aperture; a second sheet portion, and a joining bending portion connecting said first and second sheet portions, so that the first and second portions are biased towards each other by the head of the fastening member in response to the tightening of said fastening member, wherein said device is provided with first tension indicator means indicating the tension in the elongated fastener at least until the tension exceeds a first predetermined tension value.

In a mounting system for a substructure, such as described above, the advantage of a preferred device according to the first aspect of the invention is that the tension indicating device may be pre-mounted in the profiles before the fasting screws are inserted through the profiles. Moreover, by providing the first and second tension indicator means on an indicator support member in which the spring member is accommodated and when the support member is provided with a width which is less than the internal width of said base portion of the elongated mounting profile, an accurate fit of the tension indicating device in the mounting profile is achieved.

In the following the invention is described in more detail with reference to the accompanying drawings, in which:
- figure 1: is a perspective view of a tension indicating device according to a preferred embodiment of the invention;
- figure 2: is a side view of same;
- figure 3: is a perspective view of a spring member of the device in figures 1 and 2;
- figure 4: is a perspective view of a support member of the device in figures 1 and 2;
- figure 5: is a schematic cross-section view of a mounting system with a tension indicating device according to the invention; and
- figure 6: is a perspective view thereof.

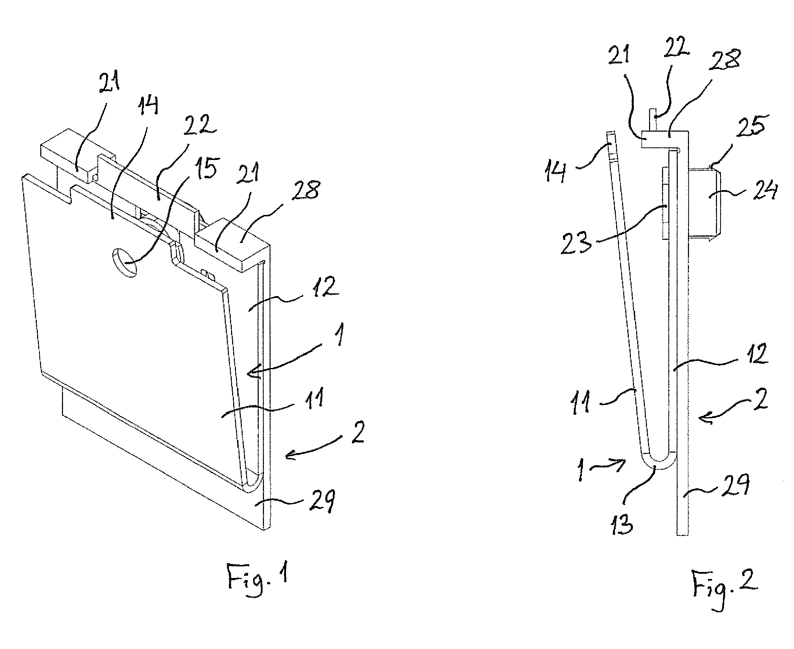

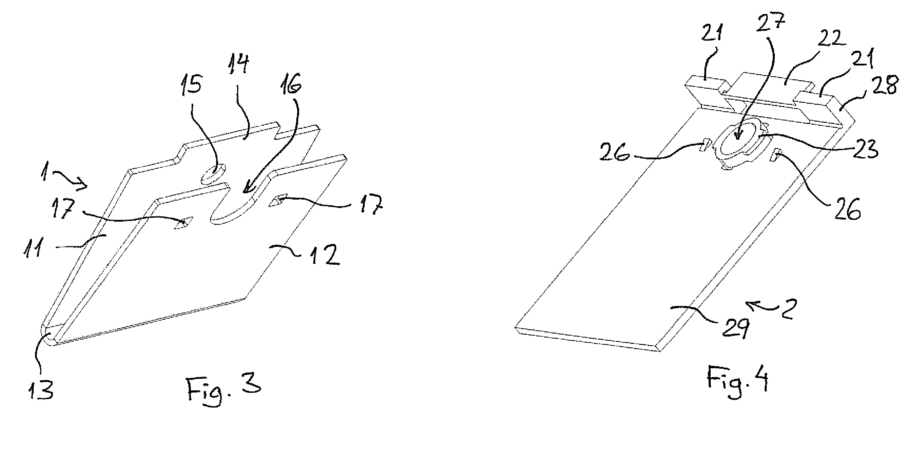

With reference to the figures 1 to 4, the tension indicating device comprises to parts: a spring member 1 and a support member 2. The spring member 1 is a generally U-shaped bent sheet metal and comprises a first sheet portion 11 and a second sheet portion 12 jointed by a bending portion 13. At the distal end of the first portion 11, there is provided an indicator tap 14, which is formed as an extension of the sheet metal of the first portion 11. At the unloaded rest position of the spring member 1 (see figures 1 to 3), the first and second portions 11, 12 of the spring member 1 are provided with a mutual angular diversion. The first portion 11 may be biased towards the second portion 12 when the spring member 1 is subjected to a load as a screw is provided through the fastener receiving hole 15 provided adjacent the distal end of the first portion 11, such as shown in figure 1. Adjacent the receiving hole 15, a cut-away aperture 16 is provided in the distal end of the second sheet portion 12. The spring member 1 is designed such that when the desired tension of the screw is achieved, the first and second portions 11, 12 are preferably biased into a parallel position relative to each other.

The support member 2 comprises a support portion 29 onto which the second portion 12 of the spring member 1 is accommodated. A reference portion 28 is provided at one end of the support portion 29, said reference portion 28 being substantially perpendicular to the support portion 29 and dimensioned so that the distal end of the second portion 12 of the spring member 1 preferably abuts the foot of the reference portion 28 when mounted correctly in the support member 2. In order to ensure a correct mounting of the spring member 1 in the support member 2, the support portion 29 is preferably provided with protruding elements 26 which cooperate with associated openings 17 in the second portion 12. The support member 2 is also provided with a fastener receiving opening 27, preferably including an upwardly extending protrusion 23 with retention elements for retaining the second portion 12 of the spring member 1 in the support member. Moreover, an outwardly protruding second protrusion 24 with profile retention elements 25 is also provided projecting in a perpendicular direction relative to the support portion 29 and in the opposite direction as the first protrusion 23.

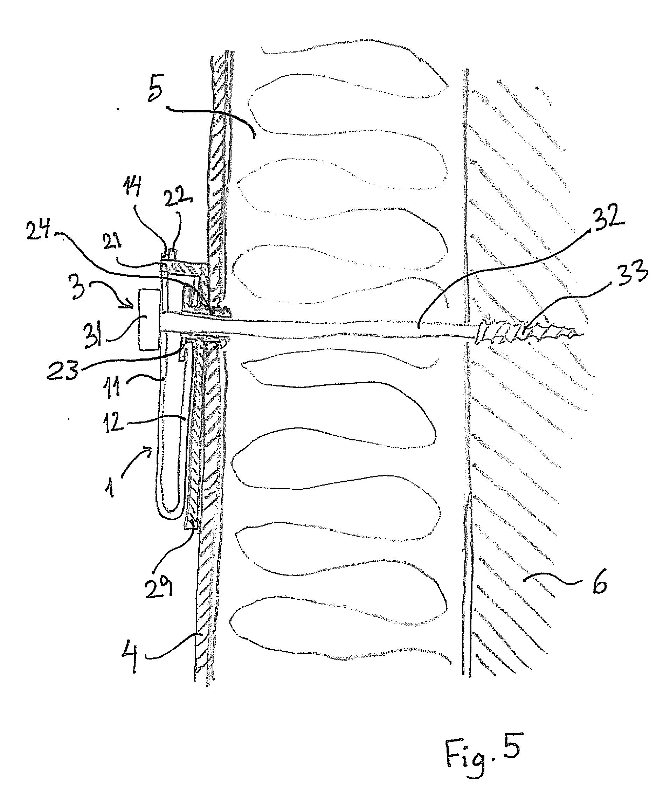

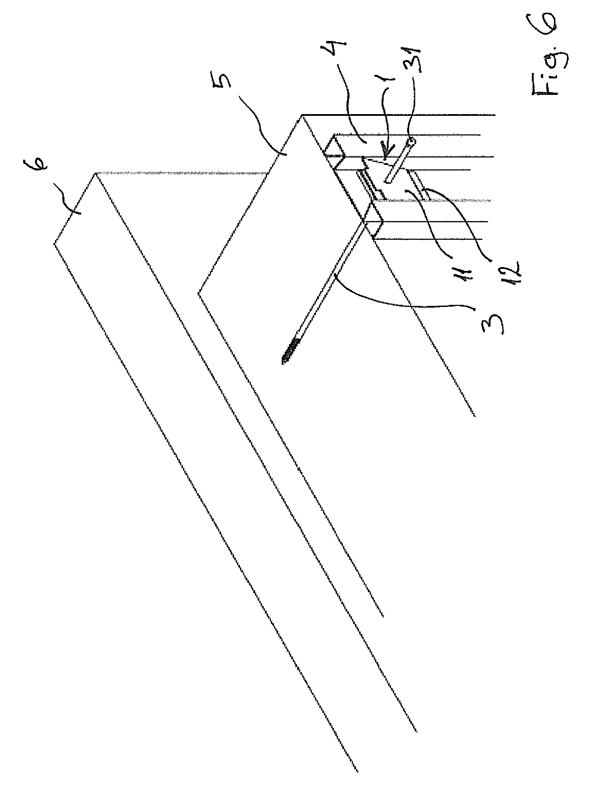

The support member 2 is preferably made in a plastic material which is advantageous since the support member 2 thereby is thermally insulating the spring member 2. Thus, the support member 2 is preventing a thermal bridge between the profiles 4 on the outside of the insulation 5 and the inner wall 6 (see figures 5 and 6), when it is used in a façade system of this kind.

The reference portion 28 includes two side portions each having a reference surface 21 at their distal ends and said reference surface 21 being provided with a predetermined reference distance to the inner surface of the support portion 29. Between the two reference surfaces 21 there is provided a tear-off element 22, which is provided substantially parallel with the inner surface of the support portion 29. The tear-off element 22 is provided at a second distance to the support portion 29 which is smaller than the reference distance. This difference between the reference difference and the second distance is at least equal to the thickness of the indicator tap 14 of the first spring portion 11 of the spring member 1.

When a screw 3 is mounted through the openings 15, 16 and 27 and into a wall (e.g. as shown in fig. 5 or 6) the spring member 1 is compressed as the first portion is angular displaced by being biased towards the second portion 12. Hereby, the indicator tap 14 on the distal end of the first spring portion 11 is being displaced into the gap between the reference surfaces 21 of the reference element 28 on the support member 2. When the outer surface of the tap 14 is aligned with the reference surfaces 21, this indicates that the correct tension of the screw 3 is achieved. If the screw 3 during its mounting is subjected to a higher tension, which might be an undesired over-tightening, this will cause an extra deflection of the first spring portion 11 whereby the tap 14 will be displaced to a position below the reference surface 21, which in turn will cause the tap 14 to make contact with the tear-off element 22 and apply a pressure on the tear-off element 22 which will cause the tear-off element 22 to break off.

In the preferred embodiment, it is found particularly advantageous that the force required for breaking off the tear-off element 22 is between 700-900 N, while the tension in the mounting screw 3 and thereby the force applied by the spring member 2 at the first predetermined tension value is approx. 500-700 N. Thus, the force required to tear off the element 22 is not substantially higher than the force required for the fastening member of the mounting system according to the invention.

In figures 5 and 6, an advantageous use of the tension indicating device according to the invention is shown, where the device is used by the mounting of a profile 4, which holds an insulation material 5 onto an inner wall 6. The screws 3 used for such mounting may be self-tapping screws 3 or screws mounted in pre-mounted plugs. In such substructure for a building cover, it is desirable that the screws 3 have the correct tension when mounted, so that the insulation material 5 is pressed against the inner wall 6 with a sufficient force to create the required friction between the inner wall 6 and the insulation 5. It is important in this application to be able to detect that all screws 3 have sufficient tension, so that the resulting pressure force between the insulation material and the inner wall has the required value.

The profile 4 is preferably a U-profile where the rectangular footprint of the tension indicating device fits into, so that the tension indicating device cannot rotate around the screw when mounted on the profile. Moreover, the device may be pre-mounted in the profile, as the device may be fitted into an opening in the profile 4 as the second outwardly projecting protrusion 24 of the support member 2 is "clicked" into this opening and retained therein by the retention elements 25.

A mounting screw 3 is then mounted in the mounting hole 15, 27, and pressed and/or screwed through the insulation material 5 and into the inner wall 6, possibly via a plug (not shown). When the screw head 31 makes contact with the first spring portion 11 of the spring member 1, the spring member 1 is compressed and the indicator tap 14 is pressed towards the second spring portion 12. When the indicator tap 14 is in level with the reference surface 21 of the support member 2, the correct tension in the screw is achieved, and the profile 4 then presses with the required, predetermined force against the insulation material 5 and the inner wall 6.

If the mounting screw 3 is advanced further the indicator tap 14 will press against the tear-off element 22 which thereby will break off. Thereby, it is visibly clear that the screw 3 has been tightened more than desired with a potential risk of damaging the mounting hole in the wall. The spring member 1 is preferably made in a steel or other metals or metal alloys with good spring properties and the support member 2 is preferably made in a plastic material. However, other materials may be used without departing from the invention.

Above, the invention is described with reference to a preferred embodiment. However it is realised by the invention that other embodiments may be provided without departing from the scope of the invention as defined in the claims. For instance, as an alternative to the embodiment described above, the reference surfaces and the tear-off element could be formed in the second spring portion of the spring member 1. Accordingly, it is realised by the invention that according to the scope of the invention as defined in the claims, it is also possible to provide a tension indicating device without a support member.

## Claims

1. A device for indicating the tension in a fastening member, such as a screw or the like, said device comprising a spring member having
a first sheet portion with a fastening member receiving aperture;
a second sheet portion, and
a joining bending portion connecting said first and second sheet portions, so that the first and second portions are biased towards each other by the head of the fastening member in response to the tightening of said fastening member,
**characterised in that**
said device is provided with first tension indicator means indicating the tension in the elongated fastener by indicating the relative displacement between the first and second sheet portions at least until the tension exceeds a first predetermined tension value.

2. A device according to claim 1, wherein the device is provided with irreversible second tension indicator means for indicating if the tension in the elongated fastener during the mounting process has been exposed to a tension exceeded a second predetermined tension value, where said second tension is higher than said first tension value.

3. A device according to claim 1 or 2, wherein the first and second tension indicator means indicate an angular displacement of the first portion relative to the second portion of the spring member.

4. A device according to any of the preceding claims, wherein the first portion is provided with an indicator at its distal end opposite the bending portion cooperating with the first and second tension indicator means respectively for indicating the displacement between the first and second portions of the spring members.

5. A device according to any of the preceding claims, wherein the first tension indicator means includes at least one alignment element adjacent the indicator on the first portion.

6. A device according to claim 5, wherein the second indicator means includes a tear-off element, preferably mounted between two alignment elements of the first tension indicator means, adapted for breaking off the indicator means if the tension exceeds the second predetermined tension value.

7. A device according to any of the preceding claims, wherein the second portion is provided with an aperture, such as a hole or a cut-away, adjacent the fastening member receiving aperture of said first portion.

8. A device according to any of the preceding claims, wherein the first and second tension indicator means are provided on an indicator support member in which the spring member is accommodated.

9. A device according to claim 8, wherein the second portion of the spring member is provided with one or more attachment means cooperating with retention means provided on the support member, said attachment means preferably including a set of retention hook-like members of said support member engaging cooperating retention apertures in the second sheet portion of the spring member.

10. A device according to any of the preceding claims, wherein said first and second indication means are provided opposite to said bending portion relative to the fastening member receiving aperture.

11. A device according to any of claims 8 to 10, wherein the support member is provided with a fastener support cylindrical portion at least having a first protrusion for accommodating the aperture of the second portion of the spring member.

12. A device according to claim 11, wherein said first protrusion is provided with retention elements for retaining said spring member in a predetermined position in the support member and relative to the first and second indicator means on said support member.

13. A mounting system comprising
an elongated mounting profile comprising
a base portion and two side flanges projecting out of the plane of the base portion defining the internal width of said base portion, and said base portion being provided with mounting holes for receiving a fastening screw;
a device for indicating the tension in a fastening member, such as a screw or the like, said device comprising a spring member having
a first sheet portion with a fastening member receiving aperture;
a second sheet portion, and
a joining bending portion connecting said first and second sheet portions, so that the first and second portions are biased towards each other by the head of the fastening member in response to the tightening of said fastening member, wherein said device is provided with first tension indicator means indicating the tension in the elongated fastener at least until the tension exceeds a first predetermined tension value.

14. A mounting system according to claim 13, wherein irreversible second tension indicator means are provided for indicating if the tension in the elongated fastener during the mounting process has been exposed to a tension exceeded a second predetermined tension value, where said second tension is higher than said first tension value.

15. A mounting system according to claim 14, wherein the first and second tension indicator means are provided on an indicator support member in which the spring member is accommodated and that the support member is provided with a width which is less than the internal width of said base portion of the elongated mounting profile.

16. A mounting system according to claim 15, wherein the second portion of the spring member is provided with one or more attachment means cooperating with retention means provided on the support member, said attachment means preferably including a set of retention hook-like members of said support member engaging cooperating retention apertures in the second sheet portion of the spring member.

17. A mounting system according to any of claims 13 to 16, wherein said first and second indication means are provided opposite to said bending portion relative to the fastening member receiving aperture.

18. A mounting system according to any of claims 13 to 17, wherein the support member is provided with a fastener support cylindrical portion at least having a first protrusion for accommodating the aperture of the second portion of the spring member.

19. A mounting system according to claim 18, wherein said first protrusion is provided with retention elements for retaining said spring member in a predetermined position in the support member and relative to the first and second indicator means on said support member.

20. A mounting system according to any of claims 13 to 19, wherein the support member is provided with a second protrusion projecting in the opposite direction relative to the first protrusion, said second protrusion being adapted for being accommodated in the mounting holes on the base profile.
